# EUROPEAN PATENT SPECIFICATION

(11) **EP 2 362 610 B1**
(45) Date of publication and mention of the grant of the patent: **10.07.2013**
(21) Application number: 10305204.9
(22) Date of filing: 26.02.2010
(51) Int. Cl.: H04L 29/12

(54) **Method and system for assigning an IPv6 link-local address**
Verfahren und System zur Zuweisung einer verbindungslokalen IPv6-Adresse
Procédé et système pour attribuer une adresse locale de liaison IPv6

(43) Date of publication of application: 31.08.2011
(73) Proprietor: Alcatel Lucent, 75007 Paris (FR)
(72) Inventor: JOSHI, Shrinivas, 400101, Mumbai (IN); OOGHE, Sven, 9050 Gentbrugge (BE)
(74) Representative: ALU Antw Patent Attorneys

(56) References cited:
- BYUNGJOO PARK ET AL: "A Fast Neighbor Discovery and DAD Scheme for Fast Handover in Mobile IPv6 Networks" NETWORKING, INTERNATIONAL CONFERENCE ON SYSTEMS AND INTERNATIONAL CONF ERENCE ON MOBILE COMMUNICATIONS AND LEARNING TECHNOLOGIES, 2006. ICN/I CONS/MCL 2006. INTERNATIONAL CONFERENCE ON MORNE, MAURITIUS 23-29 APRIL 2006, PISCATAWAY, NJ, USA,IEEE LNKD-, 23 April 2006 (2006-04-23), pages 201-206, XP010914786 ISBN: 978-0-7695-2552-5
- THOMSON CISCO T NARTEN IBM T JINMEI TOSHIBA S: "IPv6 Stateless Address Autoconfiguration; rfc4862.txt" IETF STANDARD, INTERNET ENGINEERING TASK FORCE, IETF, CH, 1 September 2007 (2007-09-01), XP015052408 ISSN: 0000-0003
- ETNA Consortium: "Comparison of Transport Network Technologies" 15 January 2010 (2010-01-15), pages 1-18, XP002590088 Retrieved from the Internet: URL:http://www.ict-etna.eu/documents/ETNA% 20D5.2%20Part%20B%20Network%20Technologies %20Comparison%20v1.1.pdf [retrieved on 2010-07-02]

## Description

### Field of the Invention

The present invention pertains to the field of Internet Protocol version 6 networks, and more particularly to the field of access networks operating with the IPv6 protocol.

### Background

IPv6 hosts may establish link-local network connectivity by performing Stateless Address Auto-Configuration (SLAAC), as specified in RFC 4862. This has the advantage that hosts can interact with each other at the IP layer as soon as they are duly connected by a layer 1/2 local area network, without any need for manual configuration of the IP addresses to be used by the hosts. The link-local address can be used to communicate with a DHCPv6 server in order to obtain a globally valid IPv6 address.

Under this scheme, it is typically assumed that the host has an IPv6 network prefix available. The host appends an interface identifier to the IPv6 network prefix to form a tentative IPv6 address. Known implementations of the SLAAC scheme generate their interface identifier on the basis of a layer-2 interface address, more particularly an Ethernet MAC address, which is assumed to be unique between hosts.

Hosts are required to initiate the Duplicate Address Detection (DAD) mechanism, as specified in RFC 4862, to ascertain uniqueness of the tentative IPv6 address within the network. This mechanism starts with a neighbor solicitation message emanating from the auto-configuring host, inviting any other host in the network using the same IPv6 address to make itself known. If no reply is received, the host may assume that its self-assigned IPv6 address is in fact unique on the network. If a reply is received, the host concludes that the self-assigned IPv6 address is taken, and disconnects itself from the network. No attempt is made to overcome the address duplication problem, because the occurrence of a duplicate address at the IPv6 level typically implies the presence of duplicate addresses at layer 2 as well, which means that the communication stack is defective beyond the IP layer's repair capabilities.

Deliverable D5.2-Part B "Comparison of Transport Networks Technologies", by ETNA Consortium, discloses Known Ethernet Transport Networks. In actual large-scale Ethernet-based networks, such as broadband aggregation networks, it has been observed that host characteristics such as Ethernet MAC addresses are often not unique, and thus several hosts can arrive at the same interface identifier and same IPv6 link-local address. Under the scheme described above, only the first one of these hosts would be able to gain access to the IPv6 network. In certain situations, the scheme may also be vulnerable to "denial of service" attacks, which operate by sending replies indicating that a particular IPv6 address is taken, when this is not in fact the case.

The paper "A Fast Neighbor discovery and DAD Scheme for Fast Handover in Mobile IPv6 Networks" by Byungjoo Park et al. (Proceedings of the International Conference on Networking, International Conference on Systems and International Conference on Mobile Communications and Learning Technologies 2006) discloses a modification of the DAD mechanism for use by IEEE 802.11 nodes, which modification includes looking up a configured link-local address in the neighbor cache of an access router, and choosing an alternative address in the event of duplication. This known system is explicitly directed to IEEE 802.11 networks in which the probability of address duplication is almost zero.

### Summary of the invention

It is an object of embodiments of the invention to provide an IPv6 link-local address allocation scheme that overcomes the above disadvantages.

According to an aspect of the present invention, there is provided a method as defined by independent claim 1.

In an embodiment of the method of the present invention, the portion of the IPv6 link-local address comprises an interface identifier.

In an embodiment of the method of the present invention, the solicitation message and the inform message are formatted according to the ICMPv6 protocol.

In an embodiment, the method of the present invention further comprises blocking the inform message from being transmitted beyond the router.

In an embodiment, the method of the present invention further comprises receiving at the router a confirmation message from the soliciting host, the confirmation message comprising the second IPv6 address.

According to an aspect of the present invention, there is provided a system as defined by independent claim 6.

In an embodiment of the system of the present invention, the portion of the IPv6 link-local address comprises an interface identifier.

In an embodiment of the system of the present invention, the solicitation message and the inform message are formatted according to the ICMPv6 protocol.

In an embodiment, the system of the present invention is adapted to block the inform message from being transmitted beyond the system.

### Brief Description of the Figures

Some embodiments of apparatus and/or methods in accordance with embodiments of the present invention are now described, by way of example only, and with reference to the accompanying drawings, in which:
Figure 1 illustrates some elements of an access network;
Figure 2 illustrates a message exchange according to the prior art;
Figure 3 illustrates a message exchange according to an embodiment of the invention;
Figure 4 illustrates an example of a novel message occurring in the message exchange according to the invention; and
Figure 5 illustrates a system according to an embodiment of the invention.

### Description of Embodiments

Embodiments of the present invention are based on the insight that the occurrence of duplicate MAC addresses and the occurrence of duplicate IPv6 link-local addresses are problems that can be solved independently, and that the former should not necessarily lead to refraining from attempting to resolve the latter.

In access networks, such as networks comprised of a plurality of hosts connected via digital subscriber lines (DSL) to an access node (AN), measures may be taken to ensure that the layer-2 addresses identifying the subscriber hosts are forced to be unique before any layer-2 frames carrying such addresses are forwarded beyond the first layer-2 bridge. Such measures may include address translation, wherein some or all addresses pertaining to subscriber hosts are translated into a different address whenever they occur in a frame header, and address pinning, wherein frames carrying a layer-2 source address that has recently been associated with a different subscriber line are discarded. Hence, it is possible to ensure layer-2 address uniqueness within the inner network area, which is shielded from the potentially duplicate subscriber addresses by the layer-2 bridges nearest to the subscribers.

However, as the layer-2 address remains unchanged at the hosts, the risk of generating duplicate IPv6 link-local addresses remains. Embodiments of the present invention resolve this problem by forcing the IPv6 link-local addresses to be unique at the end points, i.e. at the hosts, regardless of the layer-2 address that is in use at that point.

To this end, the method of the present invention intervenes in the RFC 4862 transaction. In particular, an agent connected to a plurality of subscriber hosts intercepts the hosts' neighbor solicitation messages, and replies, if necessary, with a neighbor inform message.

The agent has access to a database that stores the IPv6 link-local addresses that are in use at that moment. Preferably, the database correlates individual hosts with their IPv6 link-local addresses. The database records may be provided for that purposes with any sort of field that uniquely defines the hosts. Preferably, the database is provided with the hosts' layer-2 address, after application of any applicable layer-2 address translation schemes. Alternatively or additionally, the database may be provided with an identifier of the physical line or port of the AN through which the respective hosts are connected to the rest of the network.

Upon receiving a neighbor solicitation message, the agent accesses the database to verify whether the tentative IPv6 link-local address contained in the message, is already in use. If so, rather than simply advertising this fact and forcing the host to shut down, it will send a "neighbor inform" message imposing a different IPv6 link-local address, which is not yet in use, on the host. This ensures that the host will be able to get its IPv6 stack operational. As "neighbor solicitation" messages are no longer forwarded by the AN, "neighbor advertise" messages should no longer occur. It is advantageous to set up the AN to discard any "neighbor advertise" messages that would nevertheless appear, as these message are likely to disrupt the operation of the scheme of the present invention. When the "neighbor advertise" messages are intercepted and discarded, DAD-based denial-of-service attacks can efficiently be avoided.

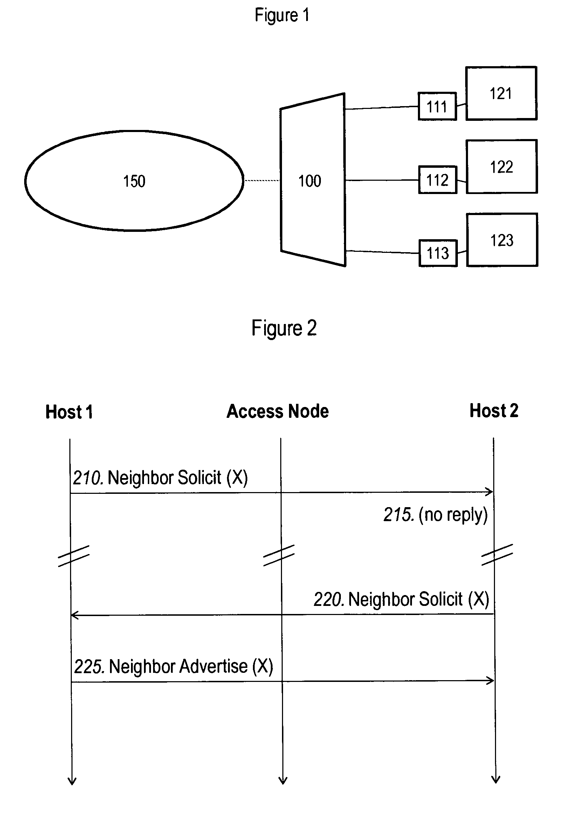

Figure 1 illustrates some elements of an access network. Access node **100** provides connectivity between a plurality of hosts **121**-**123** and a core network **150** such as the Internet. Each of the hosts **121**-**123** is connected via a subscriber line, e.g. a DSL line, terminated by a modem **111**-**113**. Without loss of generality, three modems are shown, each attached to a single host. Each of the modems **111**-**113** may operate either as a layer-2 bridge for one or more IPv6 capable hosts, or as an IPv6 capable layer-3 router. The access node **100** may in turn operate at layer 2, providing access to a separate IPv6 router, or at layer 3, incorporating the functionality of an IPv6 router. To simplify the discussion, we will assume without loss of generality that the access node **100** incorporates the IPv6 router functionality.

With reference to the prior art as depicted in Figure 2, a first host (for example, the first host **121** from Figure 1) auto-configures an IPv6 link-local address **X**, and broadcasts this for the purpose of verifying its uniqueness in step **210**. Another host that does not have the same IPv6 link-local address in use (for example, the second host **122** from Figure 1) should not respond to this message in step **215**. In the absence of responses to its message, the first host **121** will assume that the IPv6 link-local address that it has configured is in fact unique. If the second host, at some future time, were to configure or reconfigure its IPv6 link-local address, it would broadcast its address for the purpose of verifying its uniqueness in step **220**. In the illustrated example, we have assumed that this address is the same address **X** as previously selected by the first host **121**. In this case, the first host will reply with a "neighbor advertise" message in step **225**. Note that the access node **100** does not participate in the exchange according to the prior art.

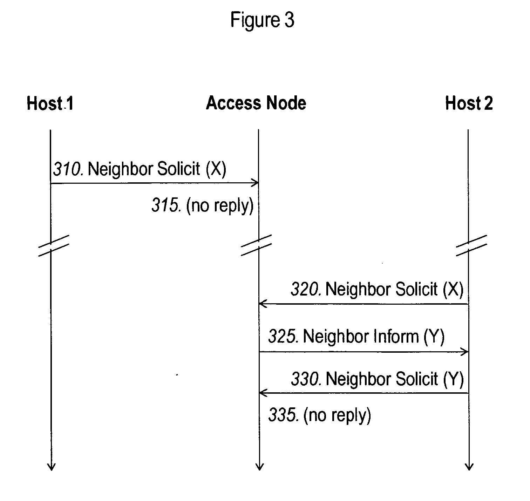

With reference to an exchange according to the invention as depicted in Figure 3, a first host (for example, the first host **121** from Figure 1) auto-configures an IPv6 link-local address **X**, and broadcasts this for the purpose of verifying its uniqueness in step **310**. The access node **100** intercepts this message, and verifies whether address **X** is already in use by another node on the network. As this is not the case, the access node **100** does not respond to this message in step **315**. The access node **100** also stores the relationship between the first host **121** and its self-assigned IPv6 link-local address **X** in a database. In the absence of responses to its message, the first host **121** will assume that the IPv6 link-local address that it has configured is in fact unique. If the second host, at some future time, were to configure or reconfigure its IPv6 link-local address, it would broadcast its address for the purpose of verifying its uniqueness in step **320**. In the illustrated example, we have once again assumed that this address is the same address **X** as previously selected by the first host **121**. The access node **100** intercepts this message, and verifies in its database whether address **X** is already in use. As this is the case, the access node **100** informs the second host **122** of this fact by means of the Neighbor Inform message sent at step **325**, while at the same time providing it with a mandatory new address **Y**. New address **Y** is selected by the access node **100** to be an address that is not yet in use (according to the access node's database), and the new assignment of address **Y** to the second host **122** is recorded in the database. Note that the first host **121** does not take any action in response to the tentative duplicate assignment of address **X** - in fact, it should not even be aware of it. To ensure compliance with the general principles of the relevant IPv6 protocols and/or to inform the access node **100** of the completion of the transaction, the second host **122** may advertise its newly received IPv6 link-local address by means of a Neighbor Solicit message in step 330. The access node **100** intercepts this message, and may verify whether the advertised address **Y** corresponds to the assignment imposed by the access node **100**.

It should be noted that a vulnerability exists with respect to prior art solutions, which is caused by the fact that a malicious user may decide not to make use of SLAAC at all, and try to use its own, maliciously generated, link-local IPv6 address. Embodiments of the invention can deal with this in the following way. Assume the second host **122** starts sending IPv6 packets with a link-local source IPv6 address **X**, without prior use of SLAAC for that link-local address. In that case, the router or access node **100** will receive this message and perform the same process as described before, i.e. it will check whether the address **X** is already in use. If **X** is already in use, the access node **100** sends a Neighbor Inform message to the second host **122**, precisely as illustrated before as step **325** in Figure 3. Only if the applicable IPv6 address of the second host **122** has been learned by the access node **100** and is known to be unique, the access node **100** will allow normal processing of the messages sent under that address.

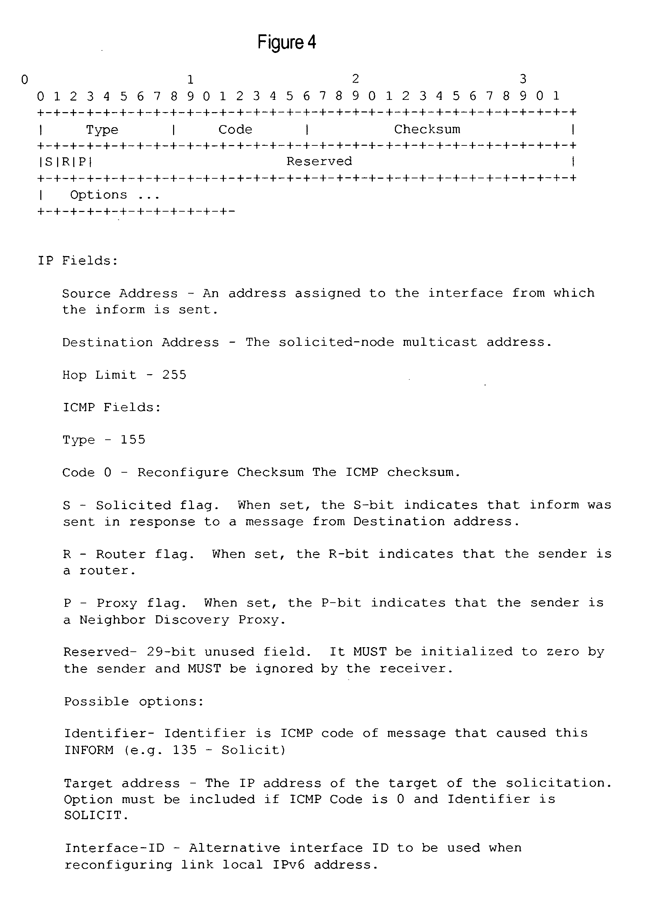

With reference to Figure 4, we will now describe a possible format for the Neighbor Inform message (message **325** in Figure 3, sent for example by access node **100**) introduced by the present invention. The message is illustrated in the standard IETF format. For clarity reasons, the message consists of a standard ICMPv6 datagram, including the source address of the interface from which the Neighbor Inform message is sent, a destination address set to the all-nodes multicast address, and a hop limit field set to 255 or any other convenient limit.

In the example, the ICMPv6 type field is set to 155. This value is presently unassigned, and may be assigned for the purpose described in the present application. However, it is possible that a different value is assigned, and the skilled person will understand that the actual value of the type field has no influence on the operation of the invention.

The ICMPv6 code field is set to 0, as it must be clear to the recipient of the message that it imposes a reconfiguration.

The ICMPv6 checksum field is calculated in the known way according to the ICMPv6 standard.

The ICMPv6 'S' flag is normally cleared, because the Neighbor Inform message is sent in response to an intercepted Neighbor Solicit message, which was broadcast by the auto-configuring host. In the special case where the Neighbor Solicit message was in fact a unicast message towards the node sending the Neighbor inform, the 'S' flag should be set.

The ICMPv6 'R' flag is set when the sender of the Neighbor Inform message is a router, which would normally be the case.

The ICMPv6 'P' flag is set when the sender of the Neighbor Inform message is a Neighbor Discovery Proxy.

In the exemplary embodiment illustrated in Figure 4, the next 29 bits are not used, and are therefore treated as a reserved field. In the example, this reserved field must be initialized to zero by the sender and must be ignored by the receiver.

Optionally, the message may include an 'Identifier' field, identifying the type of message that triggered the Neighbor Inform. In the example of Figure 3, this would be a message of type 135 (Neighbor Solicit). Furthermore, the message may include a 'Target Address' field, indicating the target of the solicitation. Finally, the message may include an 'Interface-ID' field, which is to be used by the destination node to reconfigure its IPv6 link-local address. This last field, or an equivalent, is required for the operation of the method described above.

In an alternative embodiment, the information comprised in the Neighbor Inform message described above is embedded in the existing Neighbor Advertise message, by adding new optional fields to the latter.

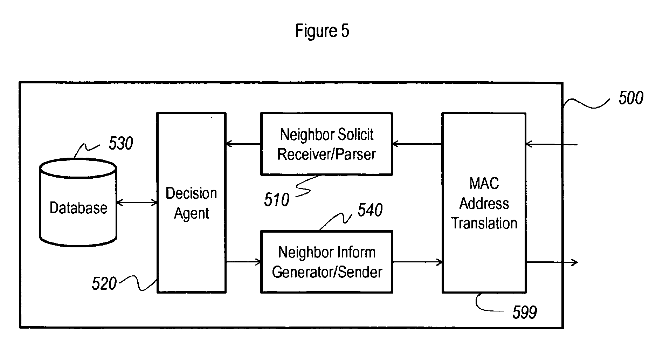

With reference to Figure 5, a system **500** for performing the tasks of the access node **100** of the examples above is now described. Incoming Neighbor Solicit messages are received and analyzed by the Neighbor Solicit Receiver/Parser block **510**. This block should at least be able to distill the (self-assigned) IPv6 link-local address of the transmitting host from the message, and to identify the transmitting host by means of at least one other characteristic, such as for example its MAC address. If the MAC address alone is used for identification purposes, it is recommended to provide means to ensure the uniqueness of MAC addresses between the hosts that communicate with system **500**, for instance the optional MAC address translation block **599**. The Neighbor Solicit Receiver/Parser block **510** passes this information on to the Decision Agent **520**. Decision Agent **520** is adapted to query a database **530** to verify whether the association between the reported IPv6 link-local address and the reported host identity, as received from the Neighbor Solicit Receiver/Parser block **510**, conflicts with a previously recorded address assignment. Decision Agent **520** is further adapted to instruct the Neighbor Inform Generator/Sender block **540**, in response to an IPv6 link-local address conflict, to impose a new address onto a host from which a Neighbor Solicit message was received. Upon receiving such an instruction, the Neighbor Inform Generator/Sender **540** generates a message, for instance according to the preferred format illustrated in Figure 4, which is transmitted to the host. The message passes through the optional MAC address translation block **599**, if present, where the destination MAC address may be updated.

The skilled person will understand that in order to operate as described, system **500** will have to have an operational network communication protocol stack in place, including an operational physical layer, an operational and addressable data link layer, and partially operational Internet Protocol functionality. These blocks are not illustrated or described in further detail.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for assigning an IPv6 link-local address to a soliciting host (122) in a large scale Ethernet-based broadband aggregation network, said soliciting host (122) being operatively connected to a router (100), the method comprising at said router (100):
- receiving a solicitation message (320) from said soliciting host (122), said solicitation message comprising a first IPv6 address (X) selected by said host (122) for use by said soliciting host (122);
- verifying whether said first IPv6 address is in use by a different host (121, 123) operatively connected to said router (100);
- sending, if said first IPv6 address is in use by a different host (121, 123), an inform message (325) comprising at least a portion of a second IPv6 link-local address (Y) for use by said soliciting host (122) to said soliciting host (122), said second IPv6 link-local address being selected such that said second IPv6 link-local address, when in use, is unique among the hosts (121, 122, 123) operatively connected to said router (100);
wherein said solicitation message comprises a layer-2 source address and wherein said inform message comprises a layer-2 destination address,
wherein said method further comprises translating said layer-2 source address and said layer-2 destination address between said router (100) and said soliciting host (122) according to a layer-2 address translation table whenever said layer-2 source address or said layer-2 destination address occurs in a frame header.

2. The method of claim 1, wherein said portion of said IPv6 link-local address comprises an interface identifier.

3. The method of claim 1 or claim 2, wherein said solicitation message (320) and said inform message (325) are formatted according to the ICMPv6 protocol.

4. The method of any of the preceding claims, further comprising blocking said inform message (325) from being transmitted beyond said router (100).

5. The method of any of the preceding claims, further comprising receiving at said router (100) a confirmation message (330) from said soliciting host (122), said confirmation message (330) comprising said second IPv6 address (Y).

6. A system (500) for assigning an IPv6 link-local address to a soliciting host (122) in a large scale Ethernet-based broadband aggregation network, said soliciting host (122) being operatively coupled to said system, said system comprising
- a database (530) comprising IPv6 link-local addresses assigned to hosts (121, 123) operatively coupled to said system (500),
- a decision agent (520) adapted to verify in said database (530) whether a given IPv6 link-local address is in use,
- a receiver (510) adapted to receive and parse a solicitation message (320) from said soliciting host (122), and to provide to said decision agent (520) an identifier pertaining to said soliciting host (122) and an IPv6 link-local address (X) assumed by said soliciting host (122),
- a transmitter (540) adapted to generate and send an inform message (325) comprising at least a portion of a second IPv6 link-local address (Y) to said soliciting host (122) in response to an instruction from said decision agent (520),
said decision agent (520) being adapted to issue said instruction upon detecting that said IPv6 link-local address (X) assumed by said soliciting host (122) is in use and subsequently selecting as said second IPv6 link-local address (Y) an IPv6 link-local address that is not in use,
wherein said system (500) further comprises a layer-2 address translation engine (599), adapted to translate a layer-2 source address of said solicitation message (320) between said soliciting host (122) and said receiver (510) and to translate a layer-2 destination address of said inform message (325) between said sender (540) and said soliciting host (122) according to a layer-2 address translation table whenever said layer-2 source address or said layer-2 destination address occurs in a frame header.

7. The system (500) of claim 6, wherein said portion of said IPv6 link-local address (Y) comprises an interface identifier.

8. The system (500) of claim 6 or claim 7, wherein said solicitation message (320) and said inform message (325) are formatted according to the ICMPv6 protocol.

9. The system (500) of any of claims 6-8, adapted to block said inform message (325) from being transmitted beyond said system (500).

## Patentansprüche

1. Verfahren zur Zuweisung einer verbindungslokalen IPv6-Adresse an einen auffordernden Host (122) in einem großflächigen Ethernet-basierten breitbandigen Aggregationsnetzwerk, wobei der besagte auffordernde Host (122) operativ an einen Router (100) angeschlossen ist, wobei das besagte Verfahren an dem besagten Router (100) umfasst:
- Empfangen einer Aufforderungsnachricht (320) von dem besagten auffordernden Host (122), wobei die besagte Aufforderungsnachricht eine von dem besagten Host (122) ausgewählte erste IPv6-Adresse (X) für die Verwendung durch den besagten auffordernden Host (122) enthält;
- Überprüfen, ob die besagte erste IPv6-Adresse von einem anderen operativ an den besagten Router (100) angeschlossenen Host (121, 123) benutzt wird;
- Senden, wenn die besagte erste IPv6-Adresse von einem anderen Host (121, 123) benutzt wird, einer Inform-Nachricht (325) mit mindestens einem Teil einer zweiten verbindungslokalen IPv6-Adresse (Y) für die Verwendung durch den besagten auffordernden Host (122) an den besagten auffordernden Host (122), wobei die besagte zweite verbindungslokale IPv6-Adresse derart ausgewählt wird, dass die besagte zweite verbindungslokale IPv6-Adresse, wenn sie benutzt wird, unter den operativ an den besagten Router (100) angeschlossenen Hosts (121, 122, 123) einmalig ist;
wobei die besagte Aufforderungsnachricht eine Schicht-2-Quelladresse enthält, und wobei die besagte Inform-Nachricht eine Schicht-2-Zieladresse enthält,
wobei das besagte Verfahren weiterhin das Übersetzen der besagten Schicht-2-Quelladresse und der besagten Schicht-2-Zieladresse zwischen dem besagten Router (100) und dem besagten auffordernden Host (122) gemäß einer Schicht-2-Adressübersetzungstabelle umfasst, wenn die besagte Schicht-2-Quelladresse oder die besagte Schicht-2-Zieladresse in einem Rahmen-Header vorkommt.

2. Verfahren nach Anspruch 1, wobei der besagte Teil der besagten verbindungslokalen IPv6-Adresse eine Schnittstellenkennung enthält.

3. Verfahren nach Anspruch 1 oder Anspruch 2, wobei die besagte Aufforderungsnachricht (320) und die besagte Inform-Nachricht (325) gemäß dem ICMPv6-Protokoll formatiert sind.

4. Verfahren nach einem beliebigen der vorstehenden Ansprüche, weiterhin umfassend das Sperren der besagten Inform-Nachricht (325), um zu verhindern, dass sie über den besagten Router (100) hinaus übertragen wird.

5. Verfahren nach einem beliebigen der vorstehenden Ansprüche, weiterhin umfassend das Empfangen, an dem besagten Router (100), einer Bestätigungsnachricht (330) von dem besagten auffordernden Host (122), wobei die besagte Bestätigungsnachricht (330) die besagte zweite IPv6-Adresse (Y) enthält.

6. System (500) zur Zuweisung einer verbindungslokalen IPv6-Adresse an einen auffordernden Host (122) in einem großflächigen Ethernet-basierten breitbandigen Aggregationsnetzwerk, wobei der besagte auffordernde Host (122) operativ an das besagte System gekoppelt ist, wobei das System umfasst:
- Eine Datenbank (530) mit den Hosts (121, 123), welche operativ an das besagte System (500) gekoppelt sind, zugewiesenen verbindungslokalen IPv6-Adressen,
- einen Entscheidungsagenten (520), welcher dazu ausgelegt ist, in der besagten Datenbank (530) zu überprüfen, ob eine gegebene verbindungslokale IPv6-Adresse benutzt wird,
- einen Empfänger (510), welcher dazu ausgelegt ist, eine Aufforderungsnachricht (320) von dem besagten auffordernden Host (122) zu empfangen und zu parsen, und eine den besagten auffordernden Host (122) betreffende Kennung (122) sowie eine von dem besagten auffordernden Host (122) angenommene verbindungslokale IPv6-Adresse (X) an den besagten Entscheidungsagenten (520) bereitzustellen,
- einen Sender (540), welcher dazu ausgelegt ist, in Reaktion auf einen Befehl von dem besagten Entscheidungsagenten (520) eine Inform-Nachricht (325) mit mindestens einem Teil einer zweiten verbindungslokalen IPv6-Adresse (Y) zu erzeugen und an den besagten auffordernden Host (122) zu senden,
wobei der besagte Entscheidungsagent (520) dazu ausgelegt ist, den besagten Befehl auszugeben, wenn erkannt wird, dass die besagte von dem besagten auffordernden Host (122) angenommene verbindungslokale IPv6-Adresse (X) benutzt wird, und anschließend eine verbindungslokale IPv6-Adresse, die nicht benutzt wird, als die besagte zweite verbindungslokale IPv6-Adresse (Y) auszuwählen,
wobei das besagte System (500) weiterhin einen Schicht-2-Adressübersetzungsautomaten (599) umfasst, welche dazu ausgelegt ist, eine Schicht-2-Quelladresse der besagten Aufforderungsnachricht (320) zwischen dem besagten auffordernden Host (122) und dem besagten Empfänger (510) zu übersetzen, und eine Schicht-2-Zieladresse der besagten Inform-Nachricht (325) zwischen dem besagten Sender (540) und dem besagten auffordernden Host (122) gemäß einer Schicht-2-Adressübersetzungstabelle zu übersetzen, wenn die besagte Schicht-2-Quelladresse oder die besagte Schicht-2-Zieladresse in einem Rahmen-Header vorkommt.

7. System (500) nach Anspruch 6, wobei der besagte Teil der besagten verbindungslokalen IPv6-Adresse (Y) eine Schnittstellenkennung enthält.

8. System (500) nach Anspruch 6 oder Anspruch 7, wobei die besagte Aufforderungsnachricht (320) und die besagte Inform-Nachricht (325) gemäß dem ICMPv6-Protokoll formatiert sind.

9. System (500) nach einem beliebigen Anspruch 6-8, ausgelegt für das Sperren der besagten Inform-Nachricht (325), um zu verhindern, dass sie über das besagte System (500) hinaus übertragen wird.

## Revendications

1. Procédé pour attribuer une adresse locale de liaison IPv6 à un hôte sollicitant (122) dans un réseau d'agrégation à large bande basé sur Ethernet à grande échelle, ledit hôte sollicitant (122) étant connecté de manière opérationnelle à un routeur (100), le procédé comprenant les étapes suivantes au niveau dudit routeur (100) :
- recevoir un message de sollicitation (320) à partir dudit hôte sollicitant (122), ledit message de sollicitation comprenant une première adresse IPv6 (X) sélectionnée par ledit hôte (122) pour être utilisée par ledit hôte sollicitant (122) ;
- vérifier si ladite première adresse IPv6 est utilisée par un hôte différent (121, 123) connecté de manière opérationnelle audit routeur (100) ;
- envoyer, si ladite première adresse IPv6 est utilisée par un hôte différent (121, 123), un message d'information (325) comprenant au moins une partie d'une deuxième adresse locale de liaison IPv6 (Y) destinée à être utilisée par ledit hôte sollicitant (122) audit hôte sollicitant (122), ladite deuxième adresse locale de liaison IPv6 étant sélectionnée de sorte que ladite deuxième adresse locale de liaison IPv6, lorsqu'elle est utilisée, est unique parmi les hôtes (121, 122, 123) connectés de manière opérationnelle audit routeur (100) ;
dans lequel ledit message de sollicitation comprend une adresse source de couche 2 et dans lequel ledit message d'information comprend une adresse de destination de couche 2,
ledit procédé comprenant en outre la traduction de ladite adresse source de couche 2 et de ladite adresse de destination de couche 2 entre ledit routeur (100) et ledit hôte sollicitant (122) conformément à une table de traduction d'adresse de couche 2 à chaque fois que ladite adresse source de couche 2 ou que ladite adresse de destination de couche 2 apparaît dans un en-tête de trame.

2. Procédé selon la revendication 1, dans lequel ladite partie de ladite adresse locale de liaison IPv6 comprend un identifiant d'interface.

3. Procédé selon la revendication 1 ou la revendication 2, dans lequel ledit message de sollicitation (320) et ledit message d'information (325) sont formatés conformément au protocole ICMPv6.

4. Procédé selon l'une quelconque des revendications précédentes, consistant en outre à empêcher la transmission dudit message d'information (325) au-delà dudit routeur (100).

5. Procédé selon l'une quelconque des revendications précédentes, comprenant en outre la réception au niveau dudit routeur (100) d'un message de confirmation (330) à partir dudit hôte de sollicitation (122), ledit message de confirmation (330) comprenant ladite deuxième adresse IPv6 (Y).

6. Système (500) pour attribuer une adresse locale de liaison IPv6 à un hôte sollicitant (122) dans un réseau d'agrégation à large bande basé sur Ethernet à grande échelle, ledit hôte sollicitant (122) étant couplé de manière opérationnelle audit système, ledit système comprenant
- une base de données (530) comprenant des adresses locales de liaison IPv6 attribuées à des hôtes (121, 123) couplés de manière opérationnelle audit système (500),
- un agent de décision (520) adapté pour vérifier dans ladite base de données (530) si une adresse locale de liaison IPv6 donnée est utilisée,
- un dispositif de réception (510) adapté pour recevoir et réaliser une analyse syntaxique d'un message de sollicitation (320) à partir dudit hôte sollicitant (122), et pour fournir audit agent de décision (520) un identifiant se rapportant audit hôte sollicitant (122) et une adresse locale de liaison IPv6 (X) supposée par ledit hôte sollicitant (122),
- un émetteur (540) adapté pour générer et envoyer un message d'information (325) comprenant au moins une partie d'une deuxième adresse locale de liaison IPv6 (Y) audit hôte sollicitant (122) en réponse à une instruction provenant dudit agent de décision (520),
ledit agent de décision (520) étant adapté pour émettre ladite instruction lorsqu'il est détecté que ladite adresse locale de liaison IPv6 (X) supposée par ledit hôte sollicitant (122) est utilisée et que l'on sélectionne ensuite comme ladite deuxième adresse locale de liaison IPv6 (Y) une adresse locale de liaison IPv6 qui n'est pas utilisée,
ledit système (500) comprenant en outre un moteur de traduction d'adresse de couche 2 (599), adapté pour traduire une adresse source de couche 2 dudit message de sollicitation (320) entre ledit hôte sollicitant (122) et ledit dispositif de réception (510) et pour traduire une adresse de destination de couche 2 dudit message d'information (325) entre ledit expéditeur (540) et ledit hôte sollicitant (122) conformément à une table de traduction d'adresse de couche 2 à chaque fois que ladite adresse source de couche 2 ou ladite adresse de destination de couche 2 apparaît dans un en-tête de trame.

7. Système (500) selon la revendication 6, dans lequel ladite partie de ladite adresse locale de liaison IPv6 (Y) comprend un identifiant d'interface.

8. Système (500) selon la revendication 6 ou la revendication 7, dans lequel ledit message de sollicitation (320) et ledit message d'information (325) sont formatés conformément au protocole ICMPv6.

9. Système (500) selon l'une quelconque des revendications 6 à 8, adapté pour empêcher 1 transmission dudit message d'information (325) au-delà dudit système (500).
